# EUROPÄISCHE PATENTSCHRIFT

(11) **EP 0 764 384 B1**
(45) Veröffentlichungstag und Bekanntmachung des Hinweises auf die Patenterteilung: **03.02.1999**
(21) Anmeldenummer: 95920773.9
(22) Anmeldetag: 08.06.1995
(51) Int. Cl.: H04Q 7/22

(54) **VERFAHREN ZUM VERBINDUNGSAUFBAU ZWISCHEN EINEM ANRUFENDEN TEILNEHMER EINES TELEKOMMUNIKATIONSNETZES UND EINEM ANGERUFENEN MOBILEN ZIELTEILNEHMER EINES MOBILFUNKNETZES**
METHOD OF ESTABLISHING A CONNECTION BETWEEN A CALLER IN A TELECOMMUNICATIONS NET AND A CALLED MOBILE SUBSCRIBER IN A RADIO-TELEPHONE NET
PROCEDE POUR L'ETABLISSEMENT D'UNE LIAISON ENTRE UN ABONNE APPELANT DANS UN RESEAU DE TELECOMMUNICATIONS ET UN ABONNE DESTINATAIRE MOBILE APPELE DANS UN RESEAU RADIOTELEPHONIQUE MOBILE

(30) Priorität: 10.06.1994 DE 4420428
(43) Veröffentlichungstag der Anmeldung: 26.03.1997
(73) Patentinhaber: SIEMENS AKTIENGESELLSCHAFT, 80333 München (DE)
(72) Erfinder: NEUBAUER, Kurt, Ferdinand, A-1180 Wien (AT); STRAKA, Peter, A-1190 Wien (AT)
(86) Internationale Anmeldenummer: DE9500750
(87) Internationale Veröffentlichungsnummer: WO9535001

(56) Entgegenhaltungen:
- WO-A-92/10069

## Beschreibung

Die Erfindung betrifft ein Verfahren zum Verbindungsaufbau zwischen einem anrufenden Teilnehmer eines Telekommunikationsnetzes und einem angerufenen mobilen Ziel teilnehmer eines zellularen digitalen Mobilfunknetzes.

Aus der Systembeschreibung "D900-Mobile Communication System", System Description SYD, 1992 (Bestellnummer A30808-X3231-X-2-7618) ist der Aufbau eines digitalen zellularen Mobilfunknetzes nach dem GSM-Standard (Global System for Mobile Communication) zur Übertragung von Sprache und Daten bekannt. Die wesentlichen Bestandteile des Mobilfunknetzes sind das Basisstationssystem (Base Station System), das Vermittlungssubsystem (Switching Subsystem) und das Betriebs- und Wartungssystem (Operating and Maintenance Subsystem). Das aus einem Funkteil und einem verdrahteten Teil bestehende Basisstationssystem stellt die Schnittstelle zu den Mobilstationen der mobilen Teilnehmer des Mobilfunknetzes einerseits und die Schnittstelle zum Vermittlungssubsystem andererseits dar, der die klassischen Vermittlungsfunktionen einschließlich der Verbindungen zu anderen Telekommunikationsnetzen, wie z.B. dem öffentlichen Fernsprechnetz oder einem anderen Mobilfunknetz, obliegt.

Aus der internationalen Patentanmeldung WO 92/10069 sind ein Verfahren und eine Anordnung zur Verbindung eines stationären Teilnehmers mit einem benachbarten mobilen Teilnehmer unter Zuhilfenahme eines Vermittlungssystems mit angeschalteter Datenverarbeitungseinrichtung in einem leitungsgebundenen Telefonnetz bekannt. Zur Ausbildung eines Taxirufsystems ohne Zwischenschaltung einer Telefonistin oder eines Operators werden von der Datenverarbeitungseinrichtung Aufenthaltsinformationen des anrufenden stationären Teilnehmers und mehrerer mobiler Teilnehmer einer mit einer Gruppenrufnummer angewählten Gruppe angefordert und anschließend ausgewertet. Daraufhin wird der in Bezug auf den anrufenden stationären Teilnehmer nächstgelegene Taxifahrer als mobiler Teilnehmer ausgewählt, der nicht bereits durch einen Anruf blockiert ist und zur Übernahme des Fahrauftrags frei ist. Die Auswahl des mobilen Teilnehmers erfolgt somit in dem leitungsgebundenen Telefonnetz durch eine Datenverarbeitungseinrichtung in Kombination mit dem Vermittlungssystem, das von den stationären Teilnehmern ankommende Leitungen und zu den mobilen Teilnehmern abgehende Leitungen aufweist. Die vom Vermittlungssystem abgehenden Leitungen führen zu einem Mobilfunknetz, in dem jeweils nur für den einen ausgewählten mobilen Teilnehmer eine Verbindung über einen Funkweg hergestellt wird.

Ein digitales Mobilfunknetz, das eine Vielzahl von Funkzellen zur flächendeckenden Versorgung der "roamenden" mobilen Teilnehmer aufweist, kann auch die Struktur eines intelligenten Netzes unterstützen, das durch dezentrale, über das gesamte Netz verteilte Intelligenz in den einzelnen Netzeinrichtungen gekennzeichnet ist. Das Mobilfunknetz mit der Struktur eines intelligenten Netzes verfügt über Dienste-Vermittlungseinrichtungen (Service Switching Points), Dienste-Steuerungseinrichtungen (Service Control Points) und Dienste-Verwaltungseinrichtungen (Service Management Systems) - siehe Systembeschreibung D900...", Seite 11, Kapitel 2.3. In einem derartig strukturierten intelligenten Netz können neue Dienste und Zusatzdienste einfach und flexibel eingeführt werden.

Im GSM-Mobilfunknetz sind alle Schnittstellen zwischen den Einrichtungen standardisiert. Den mobilen Teilnehmern stehen Dienste und Zusatzdienste (Supplementary Services) gemäß dem GSM-Standard zur Verfügung. Es können auch nicht standardisierte Zusatzdienste eingerichtet werden, die durch entsprechende Dienstecodes (Supplementary Service Codes) gekennzeichnet sind. Einer dieser Zusatzdienste ist das "Mobile Access Hunting", bei dessen Inanspruchnahme eine Verbindung zwischen einem anrufenden Teilnehmer eines Telekommunikationsnetzes und einem aus einer Zielgruppe von mobilen Teilnehmern ausgewählten mobilen Zielteilnehmer des Mobilfunknetzes aufgebaut werden soll. Derartige Zielgruppen sind durch bestimmte Personengruppen, wie beispielsweise Servicetechniker oder Mitarbeiter im Außendienst, oder durch die Art der benutzbaren Dienste, wie beispielsweise Taxirufdienste, private Zustelldienste usw., festgelegt.

Es ist die Aufgabe der vorliegenden Erfindung, ein Verfahren zum Verbindungsaufbau zwischen einem anrufenden Teilnehmer eines Telekommunikationsnetzes und einem angerufenen mobilen Zielteilnehmer eines Mobilfunknetzes anzugeben, um den oben angegebenen Zusatzdienst für die Teilnehmer des Telekommunikationsnetzes nutzbar zu machen.

Diese Aufgabe wird durch die Merkmale des Patentanspruchs 1 bzw. des Patentanspruchs 8 gelöst. Weiterbildungen der Erfindung sind in abhängigen Ansprüchen angegeben.

Demnach wird ein in Bezug auf den anrufenden Teilnehmer am besten geeigneter Zielteilnehmer der durch eine Gruppenrufnummer festgelegten Zielgruppe ausgewählt, um eine Verbindung zu diesem mobilen Zielteilnehmer aufzubauen. Vor der Auswahl dieses mobilen Zielteilnehmers werden von den Einrichtungen des standardisierten Mobilfunknetzes Informationen über die Aufenthaltsorte der mobilen Teilnehmer der durch die gewählte Gruppenrufnummer festgelegten Zielgruppe und eine Information über den Aufenthaltsort des anrufenden Teilnehmers des Telekommunikationsnetzes ermittelt und ausgewertet. Bei Vorliegen einer die Struktur eines intelligenten Netzes unterstützenden Netzarchitektur übernimmt eine Steuerungseinrichtung im intelligenten Netz die Auswahl des mobilen Zielteilnehmers.

Besteht keine intelligente Netzarchitektur, die durch eine Verbindung zu mindestens einer Steuerungseinrichtung gekennzeichnet ist, erfolgt die Auswahl des mobilen Zielteilnehmers durch ein im Mobilfunknetz vorgesehenes Heimatregister. Das Heimatregister speichert die Teilnehmerdaten der mobilen Teilnehmer mindestens einer Zielgruppe und die jeweiligen Gruppenrufnummern, von denen eine Gruppenrufnummer oder mehrere Gruppenrufnummern jeder Zielgruppe zugeordnet sind.

Zur Auswahl des mobilen Zielteilnehmers aus der durch die gewählte Gruppenrufnummer festgelegten Zielgruppe, können vom Heimatregister oder von der Steuerungseinrichtung örtliche oder zeitliche Auswahlkriterien in Bezug auf die mobilen Teilnehmer herangezogen werden. Darüber hinaus ist es möglich, die Selektion des mobilen Zielteilnehmers durch den einzelnen mobilen Teilnehmern der Zielgruppe zugeordnete Prioritäten zu erreichen.

Der Vorteil für den anrufenden Teilnehmer besteht in der Wahl einer einzigen Rufnummer, mit der er in jedem Fall einen mobilen Teilnehmer der Zielgruppe erreichen kann, und im Aufbau einer Verbindung zu dem geographisch nähesten und/oder zeitlich optimalen ausgewählten mobilen Zielteilnehmer der Gruppe. Die Vorteile für die der Zielgruppe angehörenden mobilen Teilnehmer liegen in der Optimierung des Einsatzes der mobilen Zielteilnehmer nach zeitlichen und/oder örtlichen Kriterien und in der Gewährleistung einer dauernden Erreichbarkeit der Gruppe durch den Verbindungsaufbau zu einem der mobilen Zielteilnehmer der Gruppe. Mit der Realisierung des Zusatzdienstes "Mobile Access Hunting" können Aufgaben von privaten Funknetzen übernommen werden und andere Dienste, wie beispielsweise Taxidienste oder Zustelldienste, ohne Zwischenschaltung eines "Operators" angeboten werden.

Ausführungsbeispiele der Erfindung werden anhand von Figuren erläutert. Es zeigen
- Figur 1: das Blockschaltbild einer Netzarchitektur zur Herstellung einer Verbindung eines anrufenden Teilnehmers von einem öffentlichen Fernsprechnetz bzw. Mobilfunknetz zu einem angerufenen mobilen Zielteilnehmer in einem Mobilfunknetz mit einer die Struktur eines intelligenten Netzes unterstützenden Steuerungseinrichtung und
- Figur 2: das Blockschaltbild einer Netzarchitektur zur Herstellung der Verbindung zwischen dem anrufenden Teilnehmer und dem angerufenen mobilen Zielteilnehmer ohne die Struktur eines intelligenten Netzes .

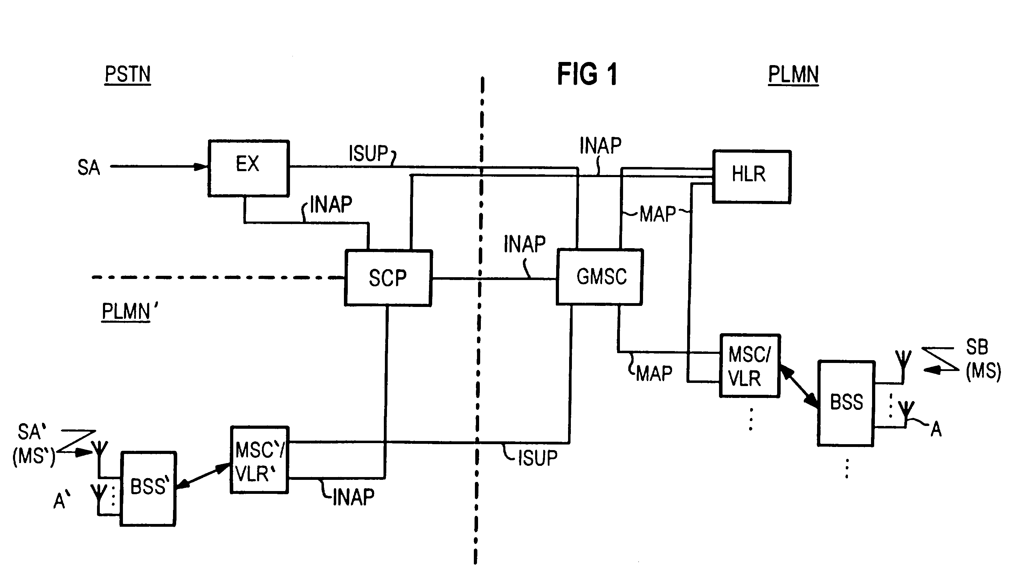

Figur 1 zeigt in prinzipieller Darstellung Teile der Netzstrukturen eines öffentlichen Fernsprechnetzes PSTN (Public Switching Telephone Network) mit einem anrufenden Teilnehmer SA, eines Mobilfunknetzes PLMN' (Public Land Mobile Network) mit einem an Stelle des Teilnehmers SA anrufenden mobilen Teilnehmer SA' und eines zellular aufgebauten digitalen Mobilfunknetzes PLMN mit einem angerufenen mobilen Teilnehmer SB. Die Telekommunikationsnetze weisen eine die Struktur eines intelligenten Netzes unterstützende Architektur auf, die durch Anordnung mindestens einer Steuerungseinrichtung SCP (Service Control Point) neben nicht dargestellten Vermittlungseinrichtungen (Service Switching Point) und Verwaltungssystemen (Service Management Sytem) zur Verwaltung von Diensten und Zusatzdiensten in den Netzen gekennzeichnet ist.

Die Darstellung in Figur 1 ist derart zu verstehen, daß eine Verbindung zwischen dem anrufenden Teilnehmer SA des Fernsprechnetzes PSTN oder dem anrufenden mobilen Teilnehmer SA' des Mobilfunknetzes PLMN' und dem angerufenen mobilen Zielteilnehmer SB des Mobilfunknetzes PLMN aufgebaut wird. Der angerufene mobile Zielteilnehmer SB gehört einer bestimmten, aus mehreren mobilen Teilnehmern bestehenden Zielgruppe an, zu der gemäß einem im Mobilfunknetz eingerichteten Zusatzdienst "Mobile Access Hunting" ein Anruf vom Teilnehmer SA bzw. vom mobilen Teilnehmer SA' durch Verwendung einer die Zielgruppe kennzeichnenden Gruppenrufnummer getätigt wird. Beispiele für die Anwendung des oben genannten Zusatzdienstes sind der Kundendienst mit einer Vielzahl von abrufbaren Servicetechnikern, der Außendienst mit den ebenfalls unter einer eigenen Rufnummer erreichbaren Mitarbeitern, private Zustelldienste, Taxidienste und ähnliches.

Wählt der Teilnehmer SA des Fernsprechnetzes PSTN eine Gruppenrufnummer und besteht eine Verbindung im Fernsprechnetz PSTN zu der Steuerungseinrichtung SCP, wird der Aufenthaltsort des anrufenden Teilnehmers SA bestimmt. Zu diesem Zweck wird die Gruppenrufnummer zusammen mit der Teilnehmerrufnummer des Teilnehmers SA von einer Vermittlungseinrichtung EX der Steuerungseinrichtung SCP zugeführt. Zwischen der Vermittlungseinrichtung EX und der Steuerungseinrichtung SCP existiert ein Signalisierungsprotokoll INAP (Intelligent Network Application Part) für die Übertragung von Daten und Steuerinformationen. Anhand der zusammen mit der gewählten Gruppenrufnummer übermittelten Teilnehmerrufnummer des Teilnehmers SA ermittelt die Steuerungseinrichtung SCP dessen Aufenthaltsort, d.h. den Ort des Teilnehmeranschlusses im festverdrahteten Fernsprechnetz PSTN. Die empfangene Gruppenrufnummer wird in eine für das Mobilfunknetz PLMN geeignete neue Gruppenrufnummer umgesetzt und diese Gruppenrufnummer zusammen mit einer den Aufenthaltsort des anrufenden Teilnehmers SA im Fernsprechnetz PSTN kennzeichnenden Information zur Vermittlungseinrichtung EX rückgesendet.

Anhand einer Adressen-Nachricht (Initial Address Message) werden die neue Gruppenrufnummer und die Information über den Aufenthaltsort des anrufenden Teilnehmers SA von der Vermittlungseinrichtung EX des Fernsprechnetzes PSTN zu einem gesonderten Mobilvermittlungssystem GMSC (Gateway Mobile Switching Center) des Mobilfunknetzes PLMN mit den mobilen Teilnehmern der Zielgruppe übertragen. Das gesonderte Mobilvermittlungssystem GMSC dient im Mobilfunknetz PLMN zur Durchschaltung der ankommenden bzw. abgehenden Anrufe vom bzw. zum Fernsprechnetz PSTN oder dem Mobilfunknetz PLMN' oder anderen Telekommunikationsnetzen. Zur Übertragung der Daten und Steuerinformationen zwischen den Vermittlungseinrichtungen der vom Anruf betroffenen unterschiedlichen Telekommunikationsnetze - im vorliegenden Fall zwischen der Vermittlungseinrichtung EX des Fernsprechnetzes PSTN und dem gesonderten Mobilvermittlungssystem GMSC des Mobilfunknetzes PLMN - gibt es ein entsprechendes Signalisierungsprotokoll ISUP (Integrated Services Digital Network User Part).

Wählt der Teilnehmer SA des Fernsprechnetzes PSTN eine Gruppenrufnummer und existiert keine Verbindung im Fernsprechnetz PSTN zur Steuerungseinrichtung SCP, erfolgt die Bestimmung des Aufenthaltsorts des Teilnehmers SA über das Mobilfunknetz PLMN. Die gewählte Gruppenrufnummer und die Teilnehmerrufnummer des Teilnehmers SA werden nach der Durchschaltung durch die Vermittlungseinrichtung EX mittels der Adressen-Nachricht zum gesonderten Mobilvermittlungssystem GMSC des Mobilfunknetzes PLMN übertragen. Hierzu wird ebenfalls das Signalisierungsprotokoll ISUP zur Übertragung der Daten und Steuerungsinformationen zwischen den Vermittlungseinrichtungen im Mobilfunknetz PLMN und denen im Fernsprechnetz PSTN verwendet.

Vom gesonderten Mobilvermittlungssystem GMSC gelangen die Teilnehmerrufnummer des Teilnehmers SA und die Gruppenrufnummer zur Steuerungseinrichtung SCP, die auf Grund der die Struktur eines intelligenten Netzes unterstützenden Architektur des Mobilfunknetzes PLMN vorhanden ist. Die Steuerungseinrichtung SCP ermittelt anhand der empfangenen Teilnehmerrufnummer den Aufenthaltsort des Teilnehmers SA und sendet eine Information über diesen Aufenthaltsort und die neue Gruppenrufnummer, die aus der vom Teilnehmer SA gewählten Gruppenrufnummer abgeleitet wird, zum gesonderten Mobilvermittlungssystem GMSC zurück. Für die Durchführung der hierfür erforderlichen Steuerungs- und Datenoperationen zwischen der Steuerungseinrichtung SCP und dem Mobilvermittlungssystem GMSC existiert das Signalisierungsprotokoll INAP, das für alle Verbindungen zur Steuerungseinrichtung SCP vorgesehen ist.

Kommt der Anruf von dem Teilnehmer SA' des Mobilfunknetzes PLMN' und besteht in diesem Netz eine Verbindung zur Steuerungseinrichtung SCP, erfolgt die Bestimmung des Aufenthaltsortes des Teilnehmers SA' in diesem Mobilfunknetz PLMN'. Die vom anrufenden Teilnehmer SA' gewählte Gruppenrufnummer, die er in seine Mobilstation MS' eingibt, und die Teilnehmerrufnummer des anrufenden Teilnehmers SA' gelangen durch Herstellen eines Funkkontaktes zwischen der Mobilstation MS' und einer von mehreren Antennen A' zu einem Basisstationssystem BSS', das durch eine Leitung an ein Mobilvermittlungssystem MSC' mit zugehörigem Besucherregister VLR' angeschlossen ist. Das Mobilvermittlungssystem MSC' übernimmt dabei die Vermittlungsfunktionen in einem zugeordneten lokalen Gebiet (Local Area) für die jeweils darin aktuell sich aufhaltenden mobilen Teilnehmer. Das zugehörige Besucherregister VLR' speichert die entsprechenden Teilnehmerdaten der mobilen Teilnehmer. Außer dem Basisstationssystem BSS' können weitere Basisstationssysteme angeordnet sein, die jeweils mit einem Mobilvermittlungssystem verbunden sind. Vom Mobilvermittlungssystem MSC' werden die beiden empfangenen Rufnummern an die Steuerungseinrichtung SCP weitergegeben.

Die Steuerungseinrichtung SCP stellt anhand der mitgeteilten Teilnehmerrufnummer des anrufenden mobilen Teilnehmers SA' fest, daß dessen Aufenthaltsort, d.h. der Ort der zugehörigen Mobilstation MS', vom zuständigen Basisstationssystem BSS' anzufordern ist, und sendet eine Nachricht an das Mobilvermittlungssystem MSC', mit der die Information über den Aufenthaltsorts des anrufenden mobilen Teilnehmers SA' im Mobilfunknetz PLMN' angefordert wird. Die Nachricht enthält unter anderem die neue Gruppenrufnummer für das Mobilfunknetz PLMN, die von der gewählten Gruppenrufnummer abgeleitet ist.

Die Ermittlung des momentanen Aufenthaltsorts des anrufenden mobilen Teilnehmers SA', sich bewegend ("roaming") zwischen den verschiedenen lokalen Gebieten und versorgt von entsprechenden Funkzellen im Mobilfunknetz PLMN', kann mit unterschiedlicher Genauigkeit durchgeführt werden. Dabei ist zwischen der Genauigkeit bezogen auf das Mobilvermittlungssystem MSC', das mehrere lokale Gebiete betreuen kann, oder bezogen auf einen das jeweilige lokale Gebiet kennzeichnenen Gebietscode (Local Area Code), oder bezogen auf die den mobilen Teilnehmer SA' aktuell versorgende Funkzelle mit einer zugehörigen Identifikationsnummer (Cell Identity) zu unterscheiden. Bei den beiden erstgenannten Möglichkeiten wird die Ortsinformation vom zuständigen Mobilvermittlungssystem MSC' zur Verfügung gestellt, während die Identifikationsnummer der zuständigen Funkzelle vom Basisstationssystem BSS' geliefert wird. Die Basis-Sende/Empfangsstationen des Basisstationssystems BSS' enthalten alle funktechnischen Einrichtungen für die jeweiligen mobilen Teilnehmer in den Funkzellen. Eine weitere Möglichkeit der Ortsbestimmung besteht darin, auf Anforderung eine Suchfunktion zu starten, bei der von den Basis-Sende/Empfangsstationen des Basisstationssytems BSS' unter Verwendung beispielsweise eines Punktzu-Mehrpunkt-Signallaufzeitmeßverfahrens der genaue Ort des mobilen Anrufers gemessen wird.

In allen Fällen erhält das Mobilvermittlungssystem MSC1' eine Information über den Aufenthaltsort des anrufenden mobilen Teilnehmers SA', die anhand der Adressen-Nachricht zusammen mit der neuen Gruppenrufnummer zum gesonderten Mobilvermittlungssystem GMSC des Mobilfunknetzes PLMN weitergeleitet wird. Da die Datenübertragung zwischen dem Mobilvermittlungssystem MSC' des Mobilfunknetzes PLMN' und dem gesonderten Mobilvermittlungssystem GMSC des Mobilfunknetzes PLMN stattfindet, wird das hierfür geeignete Signalisierungsprotokoll ISUP verwendet.

Wählt der anrufende mobile Teilnehmer SA' eine Gruppenrufnummer über seine Mobilstation MS' und existiert im Mobilfunknetz PLMN' keine Verbindung zur Steuerungseinrichtung SCP, erfolgt die Bestimmung des Aufenthaltsorts des mobilen Teilnehmers SA' über das Mobilfunknetz PLMN des angerufenen mobilen Teilnehmers SB. Die gewählte Gruppenrufnummer und die den anrufenden mobilen Teilnehmer SA' kennzeichnende Teilnehmerrufnummer werden vom Mobilvermittlungssystem MSC' des Mobilfunknetzes PLMN' zum gesonderten Mobilvermittlungssystem GMSC des Mobilfunknetzes PLMN durchgeschaltet und von dort zur Steuerungseinrichtung SCP gesendet. Die Steuerungseinrichtung SCP erkennt anhand der empfangenen Teilnehmerrufnummer, daß der Aufenthaltsort des anrufenden mobilen Teilnehmers SA' im Mobilfunknetz PLMN' zu ermitteln ist, und übermittelt eine Anforderung zur Bestimmung des Aufenthaltsort es an das gesonderte Mobilvermittlungssystem GMSC des Mobilfunknetzes PLMN zurück. Das gesonderte Mobilvermittlungssystem GMSC leitet diese Anforderung an das zuständige Mobilvermittlungssystem MSC' im Mobilfunknetz PLMN' weiter, in dem die Ortsinformation in der zuvor angegebenen Art und Weise ermittelt wird. Zusammen mit der Anforderung zur Bestimmung des Aufenthaltsorts des anrufenden mobilen Teilnehmers SA' wird die neue Gruppenrufnummer, die aus der gewählten Gruppenrufnummer abgeleitet wird, von der Steuerungseinrichtung SCP an das gesonderte Mobilvermittlungssystem GMSC des Mobilfunknetzes PLMN übergeben. Das Mobilvermittlungssystem MSC' des Mobilfunknetzes PLMN' sendet die ermittelte Information über den Aufenthaltsort des anrufenden mobilen Teilnehmers SA' an das gesonderte Mobilvermittlungssystem GMSC des Mobilfunknetzes PLMN.

Vom gesonderten Mobilvermittlungssystem GMSC werden die Ortsinformation bezüglich des anrufenden Teilnehmers SA des Fernsprechnetzes PSTN oder des anrufenden mobilen Teilnehmers SA' des Mobilfunknetzes PLMN' und die zur Kennzeichnung der Zielgruppe der mobilen Teilnehmer, aus denen der angerufene mobile Ziel teilnehmer ausgewählt wird, vorgesehene Gruppenrufnummer an ein Heimatregister HLR des Mobilfunknetzes PLMN gesendet. Dabei wird zur Übertragung der Daten und Steuerungsinformationen zwischen den Einrichtungen des zellular aufgebauten digitalen Mobilfunknetzes PLMN ein Signalisierungsprotokoll MAP (Mobile Application Part) benutzt.

Das als zentrale Teilnehmerdatenbank anzusehende Heimatregister HLR fordert von der Steuerungseinrichtung SCP unter Verwendung des Signalisierungsprotokolls INAP die Teilnehmerdaten der mobilen Teilnehmer der durch die gewählte Gruppenrufnummer definierten Zielgruppe an. Daher wird die aus der gewählten Gruppenrufnummer sich ergebende neue Gruppenrufnummer zur Steuerungseinrichtung SCP übertragen. Die Steuerungseinrichtung SCP liefert an das Heimatregister HLR die Teilnehmerdaten der mobilen Teilnehmer der angerufenen Zielgruppe und Informationen darüber, welche mobilen Teilnehmer der Zielgruppe aktuell belegt sind, welche lokalen Gebiete, die durch die zugehörigen Gebietecodes festgelegt sind, von den mobilen Teilnehmern der Zielgruppe abgedeckt sind usw.. Dabei ist eine Aufteilung der mobilen Teilnehmer der Zielgruppe in Untergruppen möglich.

Nach Erhalt der Teilnehmerdaten der mobilen Teilnehmer der angerufenen Zielgruppe werden vom Heimatregister HLR Nachrichten (messages) zu den Mobilvermittlungssystemen MSC.. des Mobilfunknetzes PLMN gesendet, in deren Zustandigkeitsbereichen die mobilen Teilnehmer der Zielgruppe sich befinden. Die Nachrichten enthalten alle für die mobilen Teilnehmer der Zielgruppe signifikanten Teilnehmerdaten und Informationen. Die Mobilvermittlungssysteme MSC..., denen Besucherregister VLR... zur Speicherung der Teilnehmerdaten der aktuell in dem jeweiligen Zuständigkeitsbereich befindlichen mobilen Teilnehmer zugeordnet sind, fordern die Informationen über die Aufenthaltsorte der einzelnen mobilen Teilnehmer der Zielgruppe im Mobilfunknetz PLMN an. Bei der Ermittlung der Aufenthaltsorte abhängig von der gewünschten Genauigkeit in Bezug auf das Mobilvermittlungssystem oder in Bezug auf das lokale Gebiet wird die jeweilige Ortsinformation vom Heimatregister HLR bereitgestellt, während bei der Wahl der Genauigkeit in Bezug auf die Funkzelle mit der zugehörigen Identifikationsnummer die Ortsinformationen auf Anforderung von den jeweiligen Basisstationssytemen BSS... des Mobilfunkgebiets PLMN geliefert werden. Darüber hinaus gibt es wie im Mobilfunknetz PLMN' des anrufenden mobilen Teilnehmers SA' die Möglichkeit der Bestimmung der Aufenthaltsorte durch das zuvor angegebene Signallaufzeitmeßverfahren, das auf Anforderung von den jeweils zuständigen Basisstationssytemen BSS... durchgeführt wird.

Das Basisstationssystem BSS weist in Analogie zum Basisstationssystem BSS' des Mobilfunknetzes PLMN' mehrere Basis-Sende/Empfangsstationen auf, die mit Antennen A für eine Vielzahl von Funkzellen und zur Herstellung von Funkkontakten über die Luftschnittstelle mit den Mobilstationen MS der mobilen Teilnehmer verbunden sind. Bei der Ermittlung der Aufenthaltsorte der mobilen Teilnehmer der Zielgruppe können in den übermittelten Daten zur Kennzeichnung der mobilen Teilnehmer der Zielgruppe Informationen in Bezug auf den bereits feststehenden Aufenthaltsort des anrufenden Teilnehmers SA bzw. SA' zusätzlich herangezogen werden. Darüber hinaus kann zur Festlegung des örtlichen Aufenthalts der Zustand der einzelnen Mitglieder der Zielgruppe, d.h., ob der mobile Teilnehmer aktiv oder inaktiv ist, überprüft werden. Bevor die Bestimmung des Aufenthaltsorts jedes einzelnen mobilen Teilnehmers der Zielgruppe beginnen kann, ist auch eine Überprüfung des jeweiligen mobilen Teilnehmers in Bezug auf seine Erreichbarkeit durchführbar.

Von den betroffenen Mobilvermittlungssystemen MSC... - d.h. von den Mobilvermittlungssystemen, in deren Zuständigkeitsbereichen sich die mobilen Teilnehmer der vom Anruf betroffenen Zielgruppe befinden - werden die Informationen über die Aufenthaltsorte der mobilen Teilnehmer der Zielgruppe zum Heimatregister HLR rückübertragen. Dabei findet wiederum das Signalisierungsprotokoll MAP zur Übertragung der Daten und Steuerungsinformationen Anwendung. Das Heimatregister HLR sammelt die von den Mobilvermittlungssystemen MSC... empfangenen Informationen aller mobiler Teilnehmer der Zielgruppe und sendet diese Informationen zusammen mit der den Aufenthaltsort des anrufenden Teilnehmers SA bzw. SA' kennzeichnenden Information zur Steuerungseinrichtung SCP.

Die Steuerungseinrichtung SCP wählt anhand der empfangenen Informationen den in Bezug auf den anrufenden Teilnehmer SA bzw. SA' am besten geeigneten mobilen Teilnehmer der Zielgruppe als den mobilen Zielteilnehmer SB aus. Der am besten geeignete mobile Zielteilnehmer ist der Teilnehmer der Zielgruppe, der beispielsweise am nähesten zum anrufenden Teilnehmer SA bzw. SA' liegt.

Das Auswahlkriterium nach örtlichen Gesichtspunkten kann durch zusätzliche geographische Informationen unterstützt werden, die von einem entsprechend ausgebildeten Informationssystem, beispielsweise in der Steuerungseinrichtung SCP, bereitgestellt werden. An Stelle der örtlichen und gegebenenfalls der zusätzlich berücksichtigbaren geographischen Gesichtspunkte kann die Auswahl auch nach Zeit- und/oder Datumsgrenzen, in denen die einzelnen mobilen Teilnehmer der Zielgruppe den Anruf empfangen können, oder nach festgelegten Auswahlalgorithmen, die den mobilen Zielteilnehmer gemäß einer Gleichverteilung der Anrufbelastung zyklisch oder gemäß zugeordneter Prioritäten für die mobilen Teilnehmer der Zielgruppe selektionieren, durchgeführt werden. Die Anzahl der mobilen Teilnehmer pro Zielgruppe kann je nach Einsatzgebiet des zur Verfügung stehenden Zusatzdienstes "Mobile Access Hunting" variabel festgelegt werden.

Von der Steuerungseinrichtung SCP wird der ausgewählte mobile Teilnehmer der Zielgruppe als der angerufene mobile Zielteilnehmer SB dem Heimatregister HLR mitgeteilt, das das gesonderte Mobilvermittlungssytem GMSC des Mobilfunknetzes PLMN von dem ausgewählten mobilen Zielteilnehmer unterrichtet. Das gesonderte Mobilvermittlungssystem GMSC startet den Verbindungsaufbau zur Durchschaltung des Anrufs zu dem Mobilvermittlungssystem, in dessen Zuständigkeitsbereich der ausgewählte mobile Zielteilnehmer sich im Mobilfunknetz PLMN befindet. Der Verbindungsaufbau erfolgt gemäß einer standardisierten Prozedur, die für alle zu den mobilen Teilnehmern des Mobilfunknetzes PLMN durchzustellenden Anrufe festgelegt ist, wie beispielsweise in der Systembeschreibung "D900...", Seite 62 beschrieben.

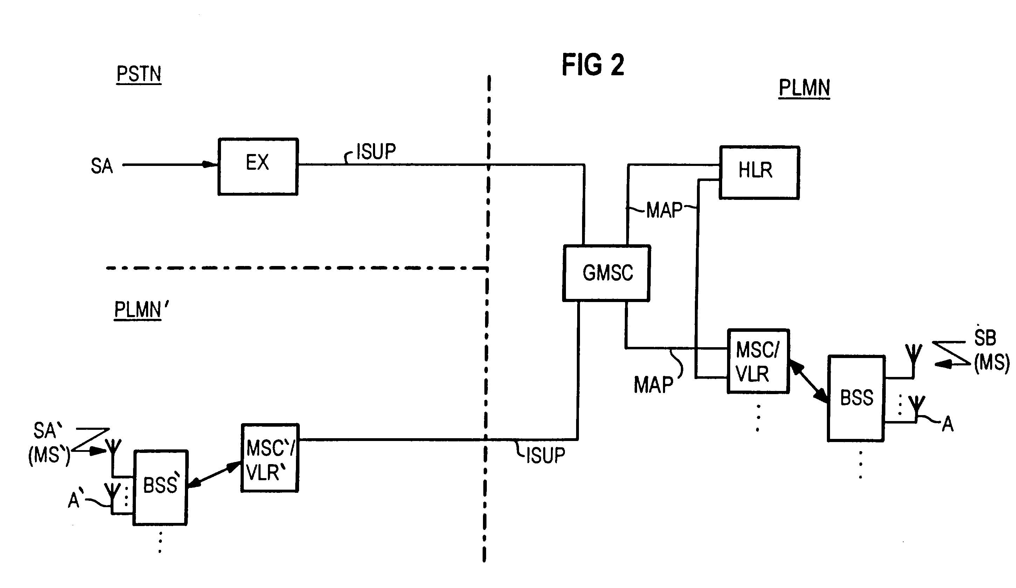

Figur 2 zeigt dieselben Telekommunikationsnetze wie Figur 1 mit der Ausnahme, daß keine Steuerungseinrichtung SCP zur Unterstützung der Struktur eines intelligenten Netzes vorhanden ist. Wählt der anrufende Teilnehmer SA im Fernsprechnetz PSTN oder der anrufende mobile Teilnehmer SA' im Mobilfunknetz PLMN' eine Rufnummer, die eine Gruppenrufnummer zur Kennzeichnung einer mehrere mobile Teilnehmer umfassenden Zielgruppe ist, wird diese Gruppenrufnummer von der jeweiligen Vermittlungseinrichtung im jeweiligen Telekommunikationsnetz - d.h. von der Vermittlungseinrichtung EX im Fernsprechnetz PSTN oder von einem der Mobilvermittlungssysteme MSC'... im Mobilfunknetz PLMN' - an das gesonderte Mobilvermittlungssystem GMSC des Mobilfunknetzes PLMN übertragen. Das gesonderte Mobilvermittlungssystem GMSC und die Vermittlungseinrichtungen EX bzw. MSC... kommunizieren miteinander über das Signalisierungsprotokoll ISUP. Jeder Zielgruppe können dabei auch mehrere Gruppenrufnummern zugeordnet sein, sodaß durch die Wahl einer dieser Gruppenrufnummern das Zielgebiet des angerufenen mobilen Teilnehmers noch eindeutiger festgelegt ist. Vom gesonderten Mobilvermittlungssystem GMSC wird die empfangene Gruppenrufnummer wie jede andere Rufnummer behandelt und dem Heimatregister HLR zur Verfügung gestellt, das die gewählte Rufnummer als Gruppenrufnummer erkennt. Die Übermittlung der Gruppenrufnummer vom gesonderten Mobilvermittlungssystem GMSC erfolgt auf Anforderung(interrogation) des Heimatregisters HLR.

Das Heimatregister HLR des Mobilfunknetzes PLMN speichert die Teilnehmerdaten der mobilen Teilnehmer jeder Zielgruppe und die Gruppenrufnummern der Zielgruppen. Für den Zusatzdienst "Mobile Access Hunting" stellt das Heimatregister HLR Algorithmen zur Auswahl des am besten geeigneten mobilen Teilnehmers der angewählten Zielgruppe zur Verfügung, wobei die Auswahl nach örtlichen und/oder zeitlichen Anforderungen oder gemäß hierarchischer oder zyklischer Gesichtspunkte vom Heimatregister HLR ausgeführt wird. Das Heimatregister HLR liefert zusätzlich zu den Teilnehmerdaten der mobilen Teilnehmer der jeweiligen Zielgruppe Informationen über bestimmte Charakteristiken der ganzen Zielgruppe und den Zeitpunkt zum Auslösen des Auswahlmechanismus.

Für die Nutzung des Zusatzdienstes "Mobile Access Hunting" (MAH) wird die den Anruf als MAH-Anruf kennzeichnende Gruppenrufnummer von dem gesonderten Mobilvermittlungssystem GMSC zu der für den ausgewählten mobilen Zielteilnehmer SB zuständigen Mobilvermittlungssystem (visited MSC) übertragen, um den MAH-Anruf von anderen Anrufen zu unterscheiden.

Das Mobilvermittlungssystem, das für den ausgewählten mobilen Zielteilnehmer SB der Zielgruppe zuständig ist, erhält vom Heimatregister HLR eine Information über diesen Zielteilnehmer, zu dessen Mobilstation MS die Verbindung über das Basisstationssystem BSS und die daran angeschlossenen Antennen RA aufzubauen ist. Der Verbindungsaufbau erfolgt nach der standardisierten Prozedur, die - wie oben angegeben - in der Systembeschreibung "D900..." beschrieben ist.

Eine Wiederholung des Verbindungsaufbaus findet statt, falls der Anruf vom Teilnehmer SA bzw. SA' zum mobilen Zielteilnehmer SB nicht durchgestellt werden konnte. Gründe für das Nichtzustandekommen der Verbindung kann Abwesenheit, Nichterreichbarkeit oder mangelnde Rückantwort innerhalb einer vorgegebenen Zeitdauer sein. Der Wiederholvorgang wird mit einer Anforderung von dem für den ausgewählten mobilen Zielteilnehmer SB zuständigen Mobilvermittlungssystem an das zugehörige Besucherregister zur Übergabe der für den ausgewählten mobilen Zielteilnehmer signifikanten Teilnehmerdaten gestartet.

## Patentansprüche

1. Verfahren zum Verbindungsaufbau zwischen einem anrufenden Teilnehmer (SA, SA') eines Telekommunikationsnetzes (PSTN, PLMN') und einem angerufenen mobilen Zielteilnehmer (SB) eines zellularen digitalen Mobilfunknetzes (PLMN), bei dem vom anrufenden Teilnehmer (SA, SA') eine Gruppenrufnummer gewählt wird, die eine Zielgruppe von mobilen Teilnehmern, der der mobile Zielteilnehmer (SB) angehört, kennzeichnet, und bei dem der Aufenthaltsort des anrufenden Teilnehmers (SA, SA') ermittelt wird,
**dadurch gekennzeichnet,**
- daß eine den Aufenthaltsort des anrufenden Teilnehmers (SA, SA') kennzeichnende Information von einem Zugangs-Mobilvermittlungssystem (GMSC), das im Mobilfunknetz ankommende und abgehende Anrufe vom bzw. zum Telekommunikationsnetz (PSTN, PLMN') durchschaltet, empfangen und von dort zu einem Heimatregister (HLR) des Mobilfunknetzes (PLMN) übertragen wird,
- daß die Teilnehmerdaten der mobilen Teilnehmer der durch die Gruppenrufnummer festgelegten Zielgruppe von einer Dienstesteuerungseinrichtung (SCP), die zur Behandlung von Diensten die Netzstruktur eines Intelligenten Netzes unterstützt, abgerufen und zum Heimatregister (HLR) übertragen werden,
- daß die Teilnehmerdaten vom Heimatregister (HLR) zu Mobilvermittlungssystemen (MSC...), in deren Zuständigkeitsbereichen sich die mobilen Teilnehmer der Zielgruppe aufhalten, ausgesendet und von dort Informationen über die Aufenthaltsorte der mobilen Teilnehmer der Zielgruppe zum Heimatregister (HLR) rückgesendet werden,
- daß die Informationen über die Aufenthaltsorte der mobilen Teilnehmer der Zielgruppe und die Information über den Aufenthaltsort des anrufenden Teilnehmers (SA, SA') von der Dienstesteuerungseinrichtung (SCP) empfangen und ausgewertet werden und daraus der mobile Zielteilnehmer (SB) von der Dienstesteuerungseinrichtung (SCP) ausgewählt und dem Heimatregister (HLR) mitgeteilt wird und
- daß eine Verbindung zu dem ausgewählten mobilen Zielteilnehmer (SB) von dem Mobilvermittlungssystem (MSC) im Mobilfunknetz (PLMN) aufgebaut wird, in dessen Zuständigkeitsbereich der ausgewählte mobile Zielteilnehmer (SB) sich befindet.

2. Verfahren nach Anspruch 1,
**dadurch gekennzeichnet,**
daß die von dem anrufenden Teilnehmer (SA, SA') des Telekommunikationsnetzes (PSTN, PLMN') gewählte Gruppenrufnummer in eine neue Gruppenrufnummer für das Mobilfunknetz (PLMN) des angerufenen mobilen Zielteilnehmers (SB) umgesetzt wird.

3. Verfahren nach Anspruch 2,
**dadurch gekennzeichnet,**
daß das Telekommunikationsnetz (PSTN, PLMN') aus einem fest verdrahteten Fernsprechnetz (PSTN) mit mindestens einer Vermittlungseinrichtung (EX) besteht, von der die gewählte Gruppenrufnummer zum Zugangs-Mobilvermittlungssystem (GMSC) des Mobilfunknetzes (PLMN) durchgeschaltet und von dort zur Dienstesteuerungseinrichtung (SCP) übertragen wird und
daß von der Dienstesteuerungseinrichtung (SCP) der Aufenthaltsort des anrufenden Teilnehmers (SA) anhand seiner Teilnehmerrufnummer ermittelt und die Information über den Aufenthaltsort zusammen mit der neuen Gruppenrufnummer zum Zugangs-Mobilvermittlungssystem (GMSC) rückübertragen wird.

4. Verfahren nach Anspruch 2,
**dadurch gekennzeichnet,**
daß das Telekommunikationsnetz (PSTN, PLMN') aus einem fest verdrahteten Fernsprechnetz (PSTN) mit der Netzstruktur des Intelligenten Netzes besteht, das über eine Vermittlungseinrichtung (EX) eine Verbindung zur Dienstesteuerungseinrichtung (SCP) aufweist,
daß die gewählte Gruppenrufnummer von der Vermittlungseinrichtung (EX) zur Dienstesteuerungseinrichtung (SCP) durchgeschaltet wird und
daß von der Dienstesteuerungseinrichtung (SCP) der Aufenthaltsort des anrufenden Teilnehmers (SA) anhand seiner Teilnehmerrufnummer ermittelt und die Information über den Aufenthaltsort zusammen mit der neuen Gruppenrufnummer zur Vermittlungseinrichtung (EX) rückübertragen und von dort an das Zugangs-Mobilvermittlungssystem (GMSC) des Mobilfunknetzes (PLMN) weitergeleitet wird.

5. Verfahren nach Anspruch 2,
**dadurch gekennzeichnet,**
daß das Telekommunikationsnetz (PSTN, PLMN') des anrufenden Teilnehmers (SA') aus einem Mobilfunknetz (PLMN') mit einem für den anrufenden Teilnehmer (SA') zuständigen Mobilvermittlungssystem (MSC') besteht, von dem die gewählte Gruppenrufnummer zum Zugangs-Mobilvermittlungssystem (GMSC) des Mobilfunknetzes (PLMN) des angerufenen Zielteilnehmers (SB) durchgeschaltet und von dort zur Dienstesteuerungseinrichtung (SCP) übertragen wird.

6. Verfahren nach Anspruch 2,
**dadurch gekennzeichnet,**
daß das Telekommunikationsnetz (PSTN, PLMN') des anrufenden Teilnehmers (SA') aus einem Mobilfunknetz (PLMN') mit der Netzstruktur des Intelligenten Netzes besteht, das eine Verbindung zur Dienstesteuerungseinrichtung (SCP) aufweist und
daß die gewählte Gruppenrufnummer von einem für den anrufenden Teilnehmer (SA') zuständigen Mobilvermittlungssystem (MSC') zur Dienstesteuerungseinrichtung (SCP) durchgeschaltet wird.

7. Verfahren nach Anspruch 5 oder 6,
**dadurch gekennzeichnet,**
daß von der Dienstesteuerungseinrichtung (SCP) eine Anforderung zur Bestimmung des Aufenthaltsorts des anrufenden Teilnehmers (SA') an das Mobilvermittlungssystem (MSC'), das für den anrufenden Teilnehmer (SA) im Mobilfunknetz (PLMN') zuständig ist, gerichtet wird,
daß von diesem Mobilvermittlungssystem (MSC') oder von einem mit dem Mobilvermittlungssystem (MSC') verbundenen Basisstationssystem (BSS') zur Herstellung von Funkkontakten mit den mobilen Teilnehmern der Aufenthaltsort des anrufenden Teilnehmers (SA') bereitgestellt wird und
daß die Information über den Aufenthaltsort des anrufenden Teilnehmers (SA') zusammen mit der neuen Gruppenrufnummer von dem zuständigen Mobilvermittlungssystem (MSC') des Mobilfunknetzes (PLMN') des anrufenden Teilnehmers (SA') zum Zugangs-Mobilvermittlungssystem (GMSC) des Mobilfunknetzes (PLMN) des angerufenen Zielteilnehmers (SB) übertragen wird.

8. Verfahren zum Verbindungsaufbau zwischen einem anrufenden Teilnehmer (SA, SA') eines Telekommunikationsnetzes (PSTN, PLMN') und einem angerufenen mobilen Zielteilnehmer (SB) eines zellularen digitalen Mobilfunknetzes (PLMN), bei dem vom anrufenden Teilnehmer (SA, SA') eine Gruppenrufnummer gewählt wird, die eine Zielgruppe von mobilen Teilnehmern kennzeichnet, der der mobile Zielteilnehmer (SB) angehört,
**dadurch gekennzeichnet,**
- daß die Teilnehmerdaten der mobilen Teilnehmer mindestens einer Zielgruppe und die jeweilige Gruppenrufnummer in einem Heimatregister (HLR) gespeichert werden,
- daß die vom anrufenden Teilnehmer (SA, SA') gewählte Gruppenrufnummer von einem Zugangs-Mobilvermittlungssystem (GMSC), das im Mobilfunknetz ankommende bzw. abgehende Anrufe vom bzw. zum Telekommunikationsnetz (PSTN, PLMN') durchschaltet, empfangen und von dort zum Heimatregister (HLR) übertragen wird
- daß vom Heimatregister (HLR) ermittelt wird, daß es sich bei der Rufnummer um eine Gruppenrufnummer einer Zielgruppe handelt,
- daß vom Heimatregister (HLR) aus den mobilen Teilnehmern der Zielgruppe ein mobiler Zielteilnehmer (SB) ausgewählt wird und
- daß eine Verbindung zu dem ausgewählten mobilen Zielteilnehmer (SB) von dem Mobilvermittlungssystem (MSC) im Mobilfunknetz (PLMN) aufgebaut wird, in dessen Zuständigkeitsbereich der ausgewählte mobile Zielteilnehmer (SB) sich aufhält.

9. Verfahren nach Anspruch 8,
**dadurch gekennzeichnet,**
daß der Zielgruppe eine oder mehrere Gruppenrufnummern zugeordnet werden, von denen jede Gruppenrufnummer der Zielgruppe zur Unterscheidung von Zielgebieten der mobilen Teilnehmer der Zielgruppe herangezogen wird.

10. Verfahren nach einem der vorhergehenden Ansprüche,
**dadurch gekennzeichnet,**
daß als mobiler Zielteilnehmer (SB) der in Bezug auf den anrufenden Teilnehmer (SA, SA') am besten geeignete mobile Teilnehmer der Zielgruppe ausgewählt wird.

11. Verfahren nach einem der vorhergehenden Ansprüche,
**dadurch gekennzeichnet,**
daß zur Auswahl des mobilen Zielteilnehmers (SB) der Zielgruppe örtliche und/oder zeitliche Auswahlkriterien verwendet werden.

12. Verfahren nach einem der vorhergehenden Ansprüche,
**dadurch gekennzeichnet,**
daß als mobiler Zielteilnehmer (SB) der zum anrufenden Teilnehmer (SA, SA') örtlich am nähesten liegende mobile Teilnehmer der Zielgruppe ausgewählt wird.

13. Verfahren nach einem der vorhergehenden Ansprüche,
**dadurch gekennzeichnet,**
daß die Auswahl des mobilen Zielteilnehmers (SB) der Zielgruppe anhand eines die Anruflast auf die mobilen Teilnehmer der Zielgruppe gleichverteilenden Auswahlverfahrens oder gemäß den mobilen Teilnehmern der Zielgruppe zugeordneten Prioritäten durchgeführt wird.

## Claims

1. Method of establishing a connection between a calling subscriber (SA, SA') of a telecommunications network (PSTN, PLMN') and a called mobile target subscriber (SB) of a cellular digital mobile radio network (PLMN), in which a group call number which identifies a target group of mobile subscribers to which the mobile target subscriber (SB) belongs is dialled by the calling subscriber (SA, SA'), and the location of the calling subscriber (SA, SA') in the telecommunications network (PSTN, PLMN') is determined,
characterized
- in that information identifying the location of the calling subscriber (SA, SA') is received by an access mobile switching system (GMSC), which in the mobile radio network connects through incoming and outgoing calls from and to the telecommunications network (PSTN, PLMN'), and from there to a home location register (HLR) of the mobile radio network (PLMN),
- in that the subscriber data on the mobile subscribers of the target group defined by the group call number are called up by a service control point (SCP), which, for handling the services sustains the network structure of an intelligent network, and are transmitted to the home location register (HLR),
- in that the subscriber data are sent out from the home location register (HLR) to mobile switching systems (MSC...) in whose areas of responsibility the mobile subscribers of the target group are located, and from there information on the locations of the mobile subscribers of the target group is sent back to the home location register (HLR),
- in that the information on the locations of the mobile subscribers of the target group and the information on the location of the calling subscriber (SA, SA') is received and evaluated by the service control point (SCP) and, from this information, the mobile target subscriber (SB) is selected by the service control point (SCP) and notified to the home location register (HLR), and
- in that a connection with the selected mobile target subscriber (SB) is established by the mobile switching system (MSC) in the mobile radio network (PLMN) in whose area of responsibility the selected mobile target subscriber (SB) is located.

2. Method according to Claim 1, characterized in that the group call number dialled by the calling subscriber (SA, SA') of the telecommunications network (PSTN, PLMN') is converted into a new group call number for the mobile radio network (PLMN) of the called mobile target subscriber (SB).

3. Method according to Claim 2, characterized in that the telecommunications network (PSTN, PLMN') comprises a hardwired telephone network (PSTN) with at least one service switching point (EX), from which the dialled group call number is connected through to the access mobile switching system (GMSC) of the mobile radio network (PLMN) and is transmitted from there to the service control point (SCP), and in that the location of the calling subscriber (SA) is determined by the service control point (SCP) on the basis of his subscriber call number and the information on the location is transmitted back together with the new group call number to the access mobile switching system (GMSC).

4. Method according to Claim 2, characterized in that the telecommunications network (PSTN, PLMN') comprises a hardwired telephone network (PSTN) with the network structure of the intelligent network, which has a connection to the service control point (SCP) via a service switching point (EX), in that the dialled group call number is connected through by the service switching point (EX) to the service control point (SCP), and in that the location of the calling subscriber (SA) is determined by the service control point (SCP) on the basis of his subscriber call number and the information on the location is transmitted back together with the new group call number to the service switching point (EX) and is passed on from there to the access mobile switching system (GMSC) of the mobile radio network (PLMN).

5. Method according to Claim 2, characterized in that the telecommunications network (PSTN, PLMN') of the calling subscriber (SA') comprises a mobile radio network (PLMN') with a mobile switching system (MSC') responsible for the calling subscriber (SA'), by which system the dialled group call number is connected through to the access mobile switching system (GMSC) of the mobile radio network (PLMN) of the called target subscriber (SB) and is transmitted from there to the service control point (SCP).

6. Method according to Claim 2, characterized in that the telecommunications network (PSTN, PLMN') of the calling subscriber (SA') comprises a mobile radio network (PLMN') with the network structure of the intelligent network, which has a connection to the service control point (SCP), and in that the dialled group call number is connected through by a mobile switching system (MSC'), responsible for the calling subscriber (SA'), to the service control point (SCP).

7. Method according to Claim 5 or 6, characterized in that a request for determining the location of the calling subscriber (SA') is directed by the service control point (SCP) to the mobile switching system (MSC') which is responsible for the calling subscriber (SA) in the mobile radio network (PLMN'), in that the location of the calling subscriber (SA') is provided by this mobile switching system (MSC'), or by a base station system (BSS') connected to the mobile switching system (MSC'), for establishing radio contacts with the mobile subscribers, and in that the information on the location of the calling subscriber (SA') is transmitted together with the new group call number from the responsible mobile switching system (MSC') of the mobile radio network (PLMN') of the calling subscriber (SA') to the access mobile switching system (GMSC) of the mobile radio network (PLMN) of the called target subscriber (SB).

8. Method of establishing a connection between a calling subscriber (SA, SA') of a telecommunications network (PSTN, PLMN') and a called mobile target subscriber (SB) of a cellular digital mobile radio network (PLMN), in which a group call number which identifies a target group of mobile subscribers to which the mobile target subscriber (SB) belongs is dialled by the calling subscriber (SA, SA'),
characterized
- in that the subscriber data of the mobile subscribers of at least one target group and the respective group call number are stored in a home location register (HLR),
- in that the group call number dialled by the calling subscriber (SA, SA') is received by an access mobile switching system (GMSC), which in the mobile radio network connects through incoming and outgoing calls from and to the telecommunications network (PSTN, PLMN'), and is transmitted from there to the home location register (HLR),
- in that it is determined by the home location register (HLR) that the call number is a group call number of a target group,
- in that a mobile target subscriber (SB) is selected by the home location register (HLR) from the mobile subscribers of the target group, and
- in that a connection with the selected mobile target subscriber (SB) is established by the mobile switching system (MSC) in the mobile radio network (PLMN) in whose area of responsibility the selected mobile target subscriber (SB) is located.

9. Method according to Claim 8, characterized in that the target group is assigned one or more group call numbers, of which each group call number of the target group is used to distinguish between target areas of the mobile subscribers of the target group.

10. Method according to one of the preceding claims, characterized in that the mobile subscriber of the target group best suited with respect to the calling subscriber (SA, SA') is selected as the mobile target subscriber (SB).

11. Method according to one of the preceding claims, characterized in that locational and/or temporal selection criteria are used for the selection of the mobile target subscriber (SB) of the target group.

12. Method according to one of the preceding claims, characterized in that the mobile subscriber of the target group who is locationally closest to the calling subscriber (SA, SA') is selected as the mobile target subscriber (SB).

13. Method according to one of the preceding claims, characterized in that the selection of the mobile target subscriber (SB) of the target group is carried out on the basis of a selection method equally distributing the call load over the mobile subscribers of the target group or according to priorities assigned to the mobile subscribers of the target group.

## Revendications

1. Procédé pour l'établissement d'une liaison entre un abonné appelant (SA, SA') d'un réseau de télécommunication (PSTN, PLMN') et un abonné destinataire mobile appelé (SB) d'un réseau de radiocommunication mobile (PLMN) numérique cellulaire, dans lequel l'abonné appelant (SA, SA') compose un numéro d'appel de groupe qui caractérise un groupe destinataire d'abonnés mobiles auquel appartient l'abonné destinataire mobile (SB) et dans lequel on détermine le lieu de séjour de l'abonné appelant (SA, SA'),
caractérisé par le fait que
- un système de commutation de service mobile à accès (GMSC), qui retransmet directement dans le réseau de radiocommunication mobile des appels arrivant ou partant de ou vers le réseau de télécommunication (PSTN, PLMN'), reçoit une information caractérisant le lieu de séjour de l'abonné appelant (SA, SA') et la transmet à un enregistreur de localisation nominal (HLR) du réseau de radiocommunication mobile (PLMN),
- un dispositif de commande de service (SCP), qui supporte pour le traitement de services la structure d'un réseau intelligent, interroge les données des abonnés mobiles du groupe destinataire fixé par le numéro d'appel de groupe et les transmet à l'enregistreur de localisation nominal (HLR),
- l'enregistreur de localisation nominal (HLR) envoie les données d'abonnés aux systèmes de commutation de service mobile (MSC...) dans les zones de compétence desquels séjournent les abonnés mobiles du groupe destinataire et ces systèmes de commutation de service mobile renvoient à l'enregistreur de localisation nominal (HLR) des informations concernant les lieux de séjour des abonnés mobiles du groupe destinataire,
- le dispositif de commande de service (SCP) reçoit et évalue les informations concernant les lieux de séjour des abonnés mobiles du groupe destinataire et l'information concernant le lieu de séjour de l'abonné appelant (SA, SA') et le dispositif de commande de service (SCP) choisit à partir de là l'abonné destinataire mobile (SB) et en informe l'enregistreur de localisation nominal (HLR) et
- le système de commutation de service mobile (MSC), situé dans le réseau de radiocommunication mobile (PLMN) et dans la zone de compétence duquel se trouve l'abonné destinataire mobile choisi (SB), établit une liaison vers l'abonné destinataire mobile choisi (SB).

2. Procédé selon la revendication 1,
caractérisé par le fait que
on convertit le numéro d'appel de groupe composé par l'abonné appelant (SA, SA') du réseau de télécommunication (PSTN, PLMN') en un nouveau numéro d'appel de groupe pour le réseau de radiocommunication mobile (PLMN) de l'abonné destinataire mobile appelé (SB).

3. Procédé selon la revendication 2,
caractérisé par le fait que
le réseau de télécommunication (PSTN, PLMN') consiste en un réseau téléphonique câblé (PSTN) avec au moins un dispositif de commutation (EX), par lequel le numéro d'appel de groupe composé est retransmis directement vers le système de commutation de service mobile à accès (GMSC) du réseau de radiocommunication mobile (PLMN) et est transmis de là vers le dispositif de commande de service (SCP), et
le dispositif de commande de service (SCP) détermine le lieu de séjour de l'abonné appelant (SA) à l'aide du numéro d'appel de cet abonné et retransmet l'information concernant le lieu de séjour en même temps que le nouveau numéro d'appel de groupe au système de commutation de service mobile à accès (GMSC).

4. Procédé selon la revendication 2,
caractérisé par le fait que
le réseau de télécommunication (PSTN, PLMN') consiste en un réseau téléphonique câblé (PSTN) ayant la structure d'un réseau intelligent qui comporte par l'intermédiaire d'un dispositif de commutation (EX) une liaison vers le dispositif de commande de service (SCP),
le dispositif de commutation (EX) retransmet directement le numéro d'appel de groupe composé vers le dispositif de commande de service (SCP), et
le dispositif de commande de service (SCP) détermine le lieu de séjour de l'abonné appelant (SA) à l'aide du numéro d'appel de cet abonné et retransmet l'information concernant le lieu de séjour en même temps que le nouveau numéro d'appel de groupe au dispositif de commutation (EX) qui le retransmet au système de commutation de service mobile à accès (GMSC) du réseau de radiocommunication mobile (PLMN) .

5. Procédé selon la revendication 2,
caractérisé par le fait que
le réseau de télécommunication (PSTN, PLMN') de l'abonné appelant (SA') consiste en un réseau de radiocommunication mobile (PLMN') avec un système de commutation de service mobile (MSC') qui est compétent pour l'abonné appelant (SA') et par lequel le numéro d'appel de groupe composé est envoyé directement au système de commutation de service mobile à accès (GMSC) du réseau de radiocommunication mobile (PLMN) de l'abonné destinataire appelé (SB) et est retransmis de là vers le dispositif de commande de service (SCP).

6. Procédé selon la revendication 2,
caractérisé par le fait que
le réseau de télécommunication (PSTN, PLMN') de l'abonné appelant (SA') consiste en un réseau de radiocommunication mobile (PLMN') ayant la structure d'un réseau intelligent qui comporte une liaison vers le dispositif de commande de service (SCP) et
un système de commutation de service mobile (MSC') compétent pour l'abonné appelant (SA') envoie directement au dispositif de commande de service (SCP) le numéro d'appel de groupe composé.

7. Procédé selon la revendication 5 ou 6,
caractérisé par le fait que
le dispositif de commande de service (SCP) adresse une demande pour la détermination du lieu de séjour de l'abonné appelant (SA') au système de commutation de service mobile (MSC') qui est situé dans le réseau de radiocommunication mobile (PLMN') et qui est compétent pour l'abonné appelant (SA),
ce système de commutation de service mobile (MSC') compétent ou un système de station de base (BSS') relié au système de commutation de service mobile (MSC') pour l'établissement de contacts radio avec les abonnés mobiles fournit le lieu de séjour de l'abonné appelant (SA') et
le système de commutation de service mobile (MSC') du réseau de radiocommunication mobile (PLMN') de l'abonné appelant (SA') retransmet au système de commutation de service mobile à accès (GMSC) du réseau de radiocommunication mobile (PLMN) de l'abonné destinataire appelé (SB) l'information concernant le lieu de séjour de l'abonné appelant (SA') en même temps que le nouveau numéro d'appel de groupe.

8. Procédé pour l'établissement d'une liaison entre un abonné appelant (SA, SA') d'un réseau de télécommunication (PSTN, PLMN') et un abonné destinataire mobile appelé (SB) d'un réseau de radiocommunication mobile (PLMN) numérique cellulaire, dans lequel l'abonné appelant (SA, SA') compose un numéro d'appel de groupe qui caractérise un groupe destinataire d'abonnés mobiles auquel appartient l'abonné destinataire mobile (SB),
caractérisé par le fait que
- un enregistreur de localisation nominal (HLR) mémorise les données des abonnés mobiles au moins d'un groupe destinataire et le numéro d'appel de groupe respectif,
- un système de commutation de service mobile à accès (GMSC), qui retransmet directement dans le réseau de radiocommunication mobile des appels arrivant ou partant de ou vers le réseau de télécommunication (PSTN, PLMN'), reçoit le numéro d'appel de groupe composé par l'abonné appelant (SA, SA') et le retransmet à l'enregistreur de localisation nominal (HLR),
- l'enregistreur de localisation nominal (HLR) reconnaît que le numéro d'appel est un numéro d'appel d'un groupe destinataire,
- l'enregistreur de localisation nominal (HLR) choisit parmi les abonnés mobiles du groupe destinataire un abonné destinataire mobile (SB), et
- le système de commutation de service mobile (MSC), situé dans le réseau de radiocommunication mobile (PLMN) et dans la zone de compétence duquel séjourne l'abonné destinataire mobile choisi (SB), établit une liaison vers l'abonné destinataire mobile choisi (SB).

9. Procédé selon la revendication 8,
caractérisé par le fait que
il est associé au groupe destinataire un ou plusieurs numéros d'appel de groupe parmi lesquels chaque numéro d'appel de groupe du groupe destinataire est exploité pour différencier des zones destinataires des abonnés mobiles du groupe destinataire.

10. Procédé selon l'une des revendications précédentes,
caractérisé par le fait que
on choisit comme abonné destinataire mobile (SB) celui des abonnés mobiles du groupe destinataire qui convient le mieux à l'abonné appelant (SA, SA').

11. Procédé selon l'une des revendications précédentes,
caractérisé par le fait que
pour choisir l'abonné destinataire mobile (SB) du groupe destinataire, on utilise des critères de choix d'espace et/ou de temps.

12. Procédé selon l'une des revendications précédentes,
caractérisé par le fait que
on choisit comme abonné destinataire mobile (SB) celui des abonnés mobiles du groupe destinataire qui est le plus proche de l'abonné appelant (SA, SA').

13. Procédé selon l'une des revendications précédentes,
caractérisé par le fait que
le choix de l'abonné destinataire mobile (SB) du groupe destinataire s'effectue à l'aide d'un procédé de choix à équipartition de la charge des appels sur les abonnés mobiles du groupe destinataire ou selon des priorités associées aux abonnés mobiles du groupe destinataire.
